# EUROPEAN PATENT SPECIFICATION

(11) **EP 4 639 410 B1**
(45) Date of publication and mention of the grant of the patent: **25.11.2026**
(21) Application number: 23861660.1
(22) Date of filing: 05.12.2023
(51) Int. Cl.: G06K 19/077

(54) **RFID SYSTEM FOR FABRICS**
RFID-SYSTEM FÜR STOFFE
SYSTÈME RFID POUR TISSUS

(30) Priority: 05.12.2022 IT 202200024972
(43) Date of publication of application: 29.10.2025
(73) Proprietor: ME Innovation SRL, 83030 Manocalzati (AV) (IT)
(72) Inventor: ZANESI, Davide, 23900 Lecco (IT)
(74) Representative: Sach, Greg Robert
(86) International application number: PCT/IB2023/062239
(87) International publication number: WO 2024/121739

(56) References cited:
- EP-A1- 2 405 054
- US-A1- 2014 103 116

## Description

The present invention refers to the field of electronic devices, with reference to the field of data transmission and reception operating in radio frequency and even more particularly to the field of TAGS operating in RFID technology. In particular, the present invention concerns RFID communication devices preferably applied or made on flexible or semi-flexible supports, with particular reference to textile supports.

Even more particularly, the present invention intends to perfect and improve an invention described by the applicant in patent application no. 102015000055504 of 25/09/2015. Similarly to at least some objects described in the invention cited above, the present invention is also intended, among others, to describe a method and related innovative electronic system, suitable to be made, or fixed in solidarity to a flexible or semi-flexible support, in particular with reference to certain types of textile supports suitable for the purpose, which will be the subject of some preferred embodiments described below.

Taking a step back, we briefly summarize the problems that were intended to be solved with the previous patent application (which will be solved even more brilliantly and innovatively by this patent application). As is known, when talking about electronic devices made on textile supports, radiofrequency devices are usually taken into consideration. Usually this technology uses an electromagnetic signal with a standardized frequency, from 125 Khz to 5.8 Ghz (for example from 860 to 960 MHz in UHF RFID coding), to exchange information from a reader device to a tag device in a contactless manner. Since the tag device generally lacks its own power supply and is, therefore, powered by the carrier coming from the reader, it is obvious that the energy coupling of the two devices is fundamental.

The antennas commonly used in the RFID field are of proportional size to the quantities usually evaluated in the field of antenna theory, this to allow the coupling of electromagnetic fields and mutual inductance between the two devices. These are basically among the fundamental reasons for the operating range even at a distance of meters of RFID technology.

RFID technology is therefore commonly used for medium-range contactless communications based on standard radio frequency identification (RFID) using magnetic field induction to enable communication between electronic devices, including mobile wireless communication devices.

These medium-range communications (on average a few meters) are usually used by portable or fixed communication devices to replace wi-fi or Bluetooth solutions, for automatic identification of goods, for electronic keys, for device identification or configuration services or for information management in logistics processes.

To date, products using RFID technology have rigid or semi-rigid supports. For example, RFID devices are commonly mounted on plastic supports made of dielectric (the most commonly used are PET and PU). The variants currently available for this solution involve either replacing the plastic support with a paper one, or mounting on polymer supports and subsequently coupling to a fabric (for example, coupled tags, as in the case of smart labels).

However, it is now known to experts in the field that the realization of an RFID device on a rigid or semi-flexible support presents, both in the realization phase and in the subsequent phases of practical use, multiple problems, which have put a brake on the realization of projects with this technology, both for economic reasons and for feasibility limits.

Among others, some relevant problems concern: existing RFID devices are made by printing or coupling a spiral-shaped conductive layer on a dielectric (or different support). To operate, the antenna must be sized correctly to obtain an inductance capable of reacting to the transmission wavelength (i.e. 860 MHz in this case). As a result, conductive antennas are generated for which all measurements are calculated.

An electronic chip (die) is soldered or glued to the centre of the antenna. As stated in many texts, conductive traces made on flexible supports must comply with rules that impose a limit on tolerable folds. As a result, these traces are poorly resistant to bending, especially lateral ones. It is known to those skilled in the art that tag breaks were often linked to chip solder failure on conductive traces. The compression of the fabric, the traction, the creases under stress, the impacts, cause cracks or actual breakages of the welds. This in fact leads to the breakage of the device.

In addition, the metal composition by which the electronic circuit is printed and the placement of the microchip by welding or gluing make the entire device extremely fragile and vulnerable. The breakage or tampering of a single metal part, as well as the detachment of the chip, entails the inoperability of the entire RFID system, consequently its delicacy entails the renunciation of its use in various areas.

Another negative factor related to existing RFIDs concerns the support in rigid or semi-flexible material on which the same device is printed, which limits its flexibility and consequently the number of possible applications.

Document US 20140103116 describes a two part tag solution, namely an RFID tag such as AK module or QFP package including an associated or primary antenna and means for attaching the tag to a surface such as fabric or cardboard. In some embodiments the primary antenna may couple to a secondary antenna provided on or with the surface. A separate secondary antenna is used for longer range operation because it may allow itself and thus the overall tag assembly, to be optimised for an operating region, using a common and economically manufacturable generic tag such as an AK module/QFP package which may account for most of the total cost. Document EP 2 405 054 a textile item identification tag to be attached to a piece of laundry or garment with an encapsulated RFID transponder, which comprises an integrated circuit and at least one near-field antenna, which is electronically coupled to the integrated circuit. The tag also comprises at least one far-field antenna positioned in coupling condition with the at least one near-field antenna and a pouch-type enclosure for holding the RFID transponder, wherein the at least one far-field antenna comprises at least one curved section, which at least partially encloses a circumference of said RFID transponder.

This as regards the prior art useful for the description of some of the technical problems solved by the previous invention as defined in the appended independent claims.

Still an object of the previous invention, which is also found in the present invention of improvement, is the realization of electronic devices for flexible or semi-flexible supports that allow the expansion of the field of application of said type of devices. Furthermore, one or more relevant objects of the invention are to describe electronic devices for flexible or semi-flexible supports suitable for solving the problems of the device described by the applicant above by improving the method of realization and expanding the frequency of use. Therefore, a further object of the present invention is to describe a method or process for the realization of electronic devices for flexible or semi-flexible supports that allows to solve the cited problems of the prior art and that brings further application advantages to such devices.

A fundamental object of the present invention is to describe a method that maintains the advantages described by the applicant above and indeed greatly improves the characteristics in addition to providing other advantages such as reduction in production cost, technological simplicity, possibility of widening the range of frequencies used. These and other purposes will be achieved thanks to the method for the realization of electronic devices for flexible or semi-flexible supports that for the realization of such devices operating in radiofrequency, uses, instead of metallic coupling for inductive coupling, the new and particularly advantageous application of the flexible metallic principle for the interference of the magnetic field generated by the emitter system, i.e. RFID reader, for the realization of such devices in particular on textile supports.

### Brief description of the invention

Below will be described in detail the advantageous variants of said system with attached device, with particular reference to the improvements made with respect to the patent previously filed by the applicant herself. Particularly advantageously, therefore, said innovative system comprises at least one support on which the system is fixed, said support being a flexible or semi-flexible surface, and even more preferably a fabric suitable for the purpose; said device further comprises at least one layer of thermoadhesive dielectric with at least preferably a smooth face and in a particularly innovative way, said electronic device comprises at least one primary antenna of laminated or wire conductive material, for example in shaped aluminium, a substantially rigid electrical module, a secondary antenna specially shaped in hyperflexible conductive material - for example conductive fabric - and an adhesive or thermoadhesive dielectric closure layer, in a particularly preferred basic embodiment of the present invention.

In particular, the RFID system for flexible supports such as the fabrics claimed herein, advantageously comprises at least one device, said device comprising at least:
- a dielectric element base layer;
- a secondary antenna made of textile conductive material;
- at least one die rigid electronic module;
- a further primary antenna made of laminated or wire conductive material;
- at least one dielectric closure layer;
said device being fixed to at least one flexible or ultra-flexible support layer, said RFID system being a UHF, HF and/or NFC RFID system, said secondary antenna in conductive textile material being adapted to reinforce said primary antenna made of laminated or wire conductive materials, one or both being adapted to refract the magnetic field emitted by an RFID/NFC reader and said secondary antenna being cantered and superimposed with respect to the primary antenna, to allow the distribution of electrical conduction even in the event of breaks in the primary antenna, the magnetic field crossing the two conductive antennas, activating the electronic module, amplifying the signal emitted by said module, the dielectric element and the dielectric layer being coupled by bonding or fusion between them and with the support layer, the module and the primary antenna, and the secondary antenna in conductive textile material remaining housed between said layers.

Still the RFID system for flexible supports such as fabrics in which the antenna in conductive fabric and the antenna in laminated or wire conductive material are with shapes and dimensions equal or substantially equal to each other for the purpose of inductive radiofrequency reception, according to known frequencies and electrically connected to the rigid electronic module alternatively or both.

**It** should be noted that, particularly advantageously, said primary conductive antenna in laminated or wire material is made with innovatively carefully studied geometry, i.e. the primary and secondary antenna will have the same shape/geometry and are coupled by direct contact by conduction, the fact of having the same geometry allows not to modify the electrical and electronic characteristics of the laminated or wire primary antenna, but on the contrary allows to increase the average life of the entire device having an optimized reflection of the electromagnetic field.

The currently proposed primary antennas have various shapes and thicknesses, designed to optimise the electrical efficiency of the device itself. The wave of the generated magnetic field is intercepted completely on the entire antenna itself allowing the reading of the electronic tag, but disadvantageously in case of mechanical stress, along the metal structure of the primary antenna, micro cracks or cuts can be created that block the electrical conduction inside the device, classic fatigue breaks, which instead in the present invention does not occur given the advantageous coupling of the two primary and secondary antennas.

By precisely superimposing a secondary antenna in flexible conductive material, with its antenna shape (the chosen antenna is preferably the same or similar to the underlying primary antenna but not necessarily the same) even in case of possible breaks of the primary antenna, the electrical conductive continuity of the device is allowed to continue in its function. In the absence of the secondary antenna made of textile conductive material, the primary antenna made of laminated or wire material would break, actually blocking the operation of the device.

On the contrary, by exploiting the electrical continuity of the secondary antenna made of textile conductive material in the electromagnetic field, not only does it not inhibit or create interference in ordinary use, but it has been verified that the signal composed of the data transmitted by the module and the initial magnetic field refracted by the antennas (primary and secondary) coupled, reach the antenna of the reader amplified even in case of injury of one of the two primary or secondary antennas, allowing the reading of the contents of the memory of the rigid module, something that otherwise would not be possible in the known art, where there is only one antenna, given the small size of the residual antenna in case of breaks that is connected to the rigid module.

Therefore, advantageously compared to traditional amplification systems, in particular for UHF and NFC RFID tags, it is possible to obtain the reading of said module even in the event of complex mechanical stresses.

For Traditional RFID system: an RFID system consisting of: an electronic die (Chip), a dipole antenna made of any design in laminated or wire conductive material, coupled together through electronic welding or inductive coupling systems. To be considered all devices that respond to a frequency between 10Khz and 2.4 Ghz.

The present invention advantageously allows to realize a UHF and/or NFC RFID system of various sizes and much more solid than those existing to date thanks to the coupling of primary and secondary antenna.

The primary antenna, preferably, will be made with sides of variable length suitable for the chosen application, substantially it is a variable size from 5 mm upwards. The sizing derives from tests that have been carried out to obtain a constant reading with even the lowest range readers and is not considered to be limiting for the scope of protection of the present invention as defined in the appended claims.

The template has been studied and coupled not only to optimize the response to the magnetic field of the reader antennas but also to optimize the electrical coupling between the layer of laminated or wire conductive material of the primary antenna and the flexible conductive material of the secondary antenna which can also be a fabric made of conductive, conductive/dielectric or nanotechnological warp and weft (made by adding conductive elements to traditional yarns with various techniques).

Traditional conductive materials, i.e. laminated or wire (as of interest for the primary antenna) means, by way of example only, dipole antennas made of Aluminium, steel, copper, brass, gold, bronze etc., or any material that is capable of conducting electric current but does not have a woven structure. "Woven structure" means the realization of electrically conductive layers obtained for the interweaving of warps and wefts of two yarns with angles of, for example, 90 degrees. Such yarns may be both conductive or one conductive and one non-conductive. The composition can be made through single yarns or composite yarns, i.e. composed of an internal yarn in non-conductive fabric, braided with a conductive type yarn.

Shapes that are too thin can reduce the amount of material in adhesion, complicating the coupling activity. On the contrary, shapes that are too large have sub-optimal reading powers and increase production costs. Studies carried out by the applicant have shown that the thickness of the foil, advantageously, does not vary the functionality of the device.

According to some calculations made for designs of some embodiments, a thickness suitable for the purpose had to be about 30 microns (range substantially from 2.5 to 200 microns) both for the "traditional" conductive material and for the flexible conductive material.

Note that with a too small thickness the device does not work because the permeability to the field is too low: so the minimum measure to be adopted is about 4 - 5 microns. Too high thicknesses, on the other hand, result in a considerable stiffening of the textile structure. For example, a signal amplification was also detected with 2 20 cent coins, i.e. thicknesses of 2 mm. It was possible to have an excellent result with excellent reliability with 14 micron aluminium foils and 50 micron silver or copper base conductive fabrics, obtaining a high flexibility, a characteristic necessary to work with fabrics and ensure the proper functioning of the device. Good results were also obtained with copper, brass, gold, silver (more expensive solutions); basically, however, any conductive material is suitable for creating the foils. Said secondary antenna, therefore, in a particularly advantageous way, will be able not only to block any mechanical breaks with respect to laminated or wire conductive materials, but also to amplify their effectiveness in terms of, for example, increased reading distance, flexibility in the textile sector, thicknesses and mechanical resistance.

In a different embodiment, the electronic chip is soldered on a small-sized primary antenna 4 present, i.e. the antenna made in the flexible or rigid area, (which will be defined as a module in the description of the figures) is a 3 x 8 mm layer antenna sized to transmit at a frequency of 860 to 960 mhz for RFID devices or 13.56 mhz for NFC devices and create a sufficient impedance to generate the potential difference capable of powering the chip with the memory included. Given the small size, however, the primary micro antenna alone would not allow communication with the readers (hence the amplification by secondary antenna, as better described in the attached figures below). One of the relevant factors to consider to make the most of the reflection of the magnetic field is the same (or substantially the same) geometry of the primary and secondary antennas.

The geometries used have been experimentally optimised to be compatible with most readers. A primary aluminium antenna with too small a surface area greatly reduces the reading distance of the device, even inhibiting its operation. On the contrary, a geometry that is too large tends to block the reader wave and therefore does not allow data transfer.

It should be noted in this regard that a plurality of RFID TAGS, in particular UHF, suitable for being applied to particularly flexible clothing products are known in the art, the document US2016/0019452 in particular describes a particularly robust UHF RFID TAG suitable for the purpose that can remain in the garment even during washing and other work phases, in particular a tag that combines a hybrid-slot loop antenna structure with a particularly large area conductor in the form of a metal sheet is described.

Therefore, the antennas described are in all respects a dipole antenna: the argument is made for the creation of a UHF tag suitable for being inserted on fabric (in which an amplification dipole antenna is made and a UHF rigid electronic component (hitachi im5-pk2525) is used. According to the descriptions and the various construction models, it is noted how the device is obtained in any case between two layers of non-heat-sealable dielectric.

This conformation shows how, the device obtained in **US'452** will always be linked to the mechanical resistance of the antenna in conductive and not conductive material and the idea of a hybrid coupling between rigid and flexible conductive materials is not mentioned. In case of panel injury, the obtained tag will significantly lose performance until it is no longer usable.

In general, in this regard, it should be noted that the amplification of the inductive signal generated by an RFID antenna, as is known, can take place by inductively coupling antennas sized to respond to a known frequency (13.56 Mhz in the case of NFC coding) but with increased dimensions. This is done both for dipole antennas (in the case of UHF RFID) and in the case of "Loop" antennas. This solution, however, in the specific case of the 13.56 MHz frequency, while increasing the efficiency and functionality of the tag, does not solve the problem of the fragility and reliability of the conductive traces or the resistance of the wire with which this "loop" is made. Consequently, this solution is never exploited in the electronic field on fabrics until the introduction of the present invention.

The document WO2014/204322 instead describes an RFID tag suitable to be used for linen such as sheets etc. said Tag being a heat-sealable UHF Tag on textile supports. This system is based on an antenna made of dipole steel wire. Various antenna geometries are depicted. The materials used are basic thermoadhesive but the entire product is a separate device, suitable to be connected to a fabric, therefore with the aforementioned problems, and also in this case that the antenna made on fabric through a thread (it is completely identical in operation and performance to the previously described document, therefore being a UHF Tag, with the only difference being the geometry used. In addition, the production costs for the construction of "steel wire" are extremely higher than the creation of polycoupled aluminium inlays with conductive fabrics.

Furthermore, both in document US2016/0019452 and in document WO2014/204322, the electronic chip is positioned on an element "outside" the amplification antenna and the system works by mutual induction. This, while eliminating the problem of welding between chip and antenna, in various industrial applications including washing, industrial chemical finishing, milling, combing, leads to a displacement of the rigid module, with consequent blocking of the inductive conduction and, therefore, the non-operation of the device.

Furthermore, the document EP 1 605 397 describes in particular a method for obtaining printed aluminium dipole antennas with particular geometries capable of amplifying the signal of an IC Tag. This device is made inside polymeric supports, no reference is made to fabrics or the like. We are talking in general about an IC Chip that is not soldered on the geometry of the antennas presented.

This patent is intended to present a series of geometries for antennas on which the electronic die is welded. This is a traditional UHF plastic tag. Such tags, as known, can be used to track products remotely. In this construction, the tags are not suitable to be applied to fabrics due to their low mechanical strength.

Finally, with reference to EP 1 739 597 this document describes a method for constructing a wireless IC tag, in particular this tag being UHF created inside a silicone system containing two antennas suitable for signal amplification, it is indicated that the product is waterproof, therefore suitable to be used also on fabric. In particular in this case the construction technique provides for the protection of the device inside a thick layer of silicone that reduces flexibility by increasing resistance to folds, not only by protecting against water. However, it should be noted that the device is thick, inflexible, and very different in nature from any textile support.

It is therefore clear that the systems/devices/methods mentioned above are only suitable for the realization of UHF TAGS from the fact that all devices have dipole antennas and loop antennas (NFC) are not mentioned in any document. Instead, in particular, among the purposes of the present invention is to describe a device and method suitable for RFID, NFC and HF TAGS, this because as known to those skilled in the art, HF and NFC tags are readable at reduced distances (improved privacy), they can also be read in contact with liquids (unlike UHF Tags) and above all they allow the interface with most commercial smartphones on the market.

But even more innovatively in the present invention, the object of the present invention is to create high mechanical strength UHF RFID TAGS for the tracking of the production phases in the textile sector for the control of logistics management and for retail management through a single device, which is made possible in an innovative way as already described and also better described below thanks to the coupling of the primary laminated or wire and secondary textile antennas.

Particularly advantageously, in the realization of the innovative device described by the present invention, the process or method for tracing the fabrics is a fundamental part to obtain a plurality of advantageous features that characterize the innovative fabric memory system described below. With reference to the patent application previously filed by the applicant, the principle of double coupling between antennas in wire or laminated conductive material and flexible conductive material is advantageously exploited in the present patent application, for the reasons described above.

As a rule, it is completely abnormal, or even not recommended, to put a metallic and therefore reflective element under an RFID or NFC tag. In support of this thesis, it should be noted that there are RFID, NFC and HF tags on the market shielded with ferromagnetic materials so as to make them work even on metal products. Instead, by shaping the flexible metal secondary antenna in a functional way, much of the emitted wave is not reflected. The wave manages to cross the device by stressing the module and the overall signal is amplified, exploiting the refracted waves around it. This is completely new in the field of RFID, NFC and HF - all this having already been described in the previous patent application that is being perfected.

With regard to the steps of the innovative process already described, the advantage of the direct application of a laminated or wire (e.g. metallic) antenna on a fabric, or the subsequent application of a dielectric dielectric and water-repellent material of said laminated or wire antenna, create a multilevel structure that improves the overall characteristics of the device itself or, particularly advantageously, confer greater resistance to breakage of the laminated or wire antennas on the fabric. In addition, the substrate created by the basic dielectric layer, which is fixed on the fabric on one side and leaves a smooth surface on which we rest the sheet, improves the adhesion of the metal layer on the fabric, this decreasing the rate of moisture that crosses the barrier created by the layers, increasing the lifetime of the device.

It should be noted that in the previous patent solutions had been proposed even without a base bottom, such solutions were disadvantageous, so in the present patent application the base bottom will advantageously always be present to give structure to the device, as will be better clarified below. The base bottom may be any material such as polymers.

Furthermore, there are no welds in the electronic device described in the previous invention unlike in the tracing system for fabrics described in the present invention, this is because the fundamental parts of the system and its device are now fixed by different methods (i.e. dome welding better described below, which allows to reduce time and costs) having solved the problem of breakages in the case of welds.

In a particularly advantageous way, it is intended to describe in detail in this patent application of improvement, the realization of a tracking system for fabrics comprising an electronic device comprising some advantageous features described above but which includes further innovative features to make the tracking system for fabrics more performant (in terms of cost reduction, being able to apply a standard production cycle, in terms of production complexity, etc.) and to solve some problems encountered in the previous patent application.

Similarly, it is intended to describe in detail in this patent application of improvement a process for the digitization of fabrics comprising some advantageous features described above but which is further performing and solves some problems encountered in the previous patent application. Therefore, as advantageous as the original method was, studies and tests have made it possible to make multiple innovative variants with respect to the previous invention; in a particularly advantageous way, the present improvement invention includes a method of realization and related system/device and one or more variants of method and system/device and in an innovative way includes the use of fabrics by way of mere example in polyester/silver, polyester/copper, nickel/copper and more that must have certain characteristics, i.e. degree of controlled elongation, since the conductive fabric is the only mechanical element able to keep the electrical conduction constant, which are those with which the secondary antenna is therefore made.

In fact, using for example any fabric as a base layer, the dielectric materials used for the dielectric layer and the primary antenna for example in aluminium would not have structural support and could elongate or deform, disadvantageously causing the breakage of the electronic device. Therefore, the secondary antenna in flexible textile material chosen as reinforcement, in this case the fabric, must have at least the characteristics indicated above to advantageously give support, structural solidity and electrical conduction, for which the secondary antenna will be part of the process in some particularly innovative variants object of the present improvement patent.

In particular, the innovative process object of the present invention advantageously comprises the application of a dielectric element layer, the type of materials preferably used fall within the group of thermoadhesive or thermoplastic polyurethanes, and even more particularly and innovatively, said dielectric layer is fixed on the base (or preferably on the fabric) by hot application with heat press or through adhesives. The best solution remains hot pressing, this is because it has been verified that by applying the device, for example to a shirt, when the garment is washed and subsequently ironed, due to the **TPU** numerous wrinkles or folds are created in the area where the device is fixed, instead using hot pressing this problem is significantly reduced.

**In** the previous patent, the dielectric layer could be applied, for example, with:
- screen printing technique: it has been verified that it gives good results by applying a significant number of layers of dielectric material. At first glance it looks like a paint and to have a sufficient layer it is necessary to make more steps, however, disadvantageously more layers are more expensive in production and cause processing problems and also, over time, fabric folds could create cracks and therefore not properly seal the device;
   ink-jet printing: it was a very slow process that fails to create one solid layer of dielectric material capable of validly supporting the metal antenna as the ink penetrates the fabric. **In** particular, ink-jet printing, unlike screen printing, for example, where the materials are "pasty", allows the deposition of dielectric materials in liquid form. This liquid penetrates into the warps and wefts of the fabric to obtain a "structural" bottom but it is necessary to create many layers and, between one and the other, allow adequate drying;
- flexography: a technique similar to ink-jet, without the disadvantage of slowness, but also in this case the ink tends to penetrate the fabric and fails to close the holes between warps and wefts, so disadvantageously, it is not possible to have an adequate support layer both structurally and in terms of waterproofing;
- spray technique: tends to stiffen the fabric;
- coating technique: it is only useful for large processes, it does not allow the device to be made in a localized area, it creates a uniform layer over the entire fabric;
- 3D printing technique: long processing times, the dielectric material applied is excessively rigid with respect to the fabric.
- Tape extrusion technique.
- Die-cutting of polymeric materials

Furthermore, it has been verified that using a TPU with a thickness of substantially 85 microns (with a value range of 25 microns to 2 mm) further improves the problem of post-ironing folds or wrinkles.

It should be noted that even thinner materials as long as thermoadhesive polymeric materials, even not based on polyurethane, such as PVC, with a thickness of for example 25 microns, as long as they have sufficient thickness to ensure adhesion and remain buoyant with respect to the fabric, can be suitable for the purpose. Obviously, you can use TPUs with higher thicknesses, but this reduces the flexibility of the device. In particular, this category of materials, namely TPUs, will always be innovatively applied with a certain thickness in the present improvement patent, both to give structure and to waterproof the device. The usable support may also be semi-rigid such as a PET or the like. It is generally noted that any dielectric type material can be suitable for the purpose, here reference is made to those considered most advantageous, without anything detracting from the scope of protection of the present invention as defined in the appended claims.

In particular, the TPUs of interest herein have among the characteristics useful to the present invention, which had not previously been specified, the fact of having at least one side with glue that manages to penetrate the fabric, making it well adhered and a substantially smooth layer that remains facing the side opposite the fabric. However, it is possible to obtain technologically advanced solutions even if the component is not heat-sealed to the fabric. It is advantageously on the side that does not penetrate into the fabric that is to be applied, in the innovative method described herein, the antenna of flexible conductive material, said smooth side allows a slight slip (in the order of microns) of the material on the dielectric element, this improves the response to possible bending of the device leaving readjustment margins between the elements, thus reducing, in a particularly advantageous way, the breaks of the device. Furthermore, this also reduces the effect of wrinkles on the surface of the fabric from the external side, by applying a TPU with the characteristics indicated above and with a particular thickness (indicated above); the TPU chosen is an optimal compromise between flexibility and resistance.

Tests with other materials showed that, after intensive use of the device, it was impossible to remove the folds from the garment in the area where the device was applied. Basically, it turned out that the greater the thickness and the lesser the aesthetic defect, but at the expense of the flexibility and "softness" of the device.

Unlike the previous invention, in this case, a further metallic conductive layer is coupled to the flexible conductive layer with the soldered chip. This layer can also have the dielectric closure layer, which is preferably always made of TPU, and even more preferably is a TPU element with an approximate thickness of 250 microns (with a range of 25 to 250 microns), is applied by heat-press, as other techniques described in the previous patent do not guarantee the mechanical seal of the rigid electronic module in the assigned position, so they are non-functional and unnecessary techniques. The dielectric closure material may also be non-thermo-adhesive and pre-formed prior to application.

In a further advantageous and innovative way, a dielectric base element with a surface preferably higher than the surface of the dielectric closure element has been made for the present device of the relative system and relative method; the reduction of the surface can be carried out in any way suitable for the purpose, for example by giving the dielectric base element a shape with a particular shape. Basically, regardless of the shape, the geometry of the base element must advantageously allow free spaces between the fabric and the upper dielectric closure layer, so that even the upper closure layer can be welded on the fabric, advantageously increasing the physical tightness of the entire device, moreover, the rigidity of the module is reduced and still in a further advantageous way, thanks to said welding, the areas of possible water infiltration are minimized for which the waterproofing of the electronic part is increased.

**It** should be noted that this is an extremely significant advantage compared to the previous invention, as often the device will be applied to a wearable or otherwise washable garment so that, by increasing the waterproofing of the electronic part, the life time of the device is increased.

Furthermore, with respect to the previous invention, the method and device described by the present invention comprise an innovative variant in which the dielectric element is made by way of example of kapton or Pet having a thickness preferably varying between 25 to 50 microns; in this case on the side between the kapton element and the fabric a void is created, the kapton is therefore not glued to the fabric; subsequently the secondary antenna in flexible fabric is applied, on it the chip subsequently resin coated so as to form a rigid electronic module and finally the closure layer, preferably made of **TPU** (the details will be described below with reference to the attached figures); it will be the **TPU** closure layer that will encapsulate every other element giving compactness to the device. **In** this embodiment, particularly advantageously, the flexibility of the innovative electronic device is much greater than the flexibility of the basic electronic device. On the other hand, in the area where the device is applied, it is not possible to iron the fabric, this creates a predominantly aesthetic problem, not a functional problem; so this solution is advantageously applied when the device remains hidden from view. Note that kapton also has excellent moisture resistance in addition to heat resistance and geometric non-deformability of the dielectric.

Still in a particularly advantageous and innovative way, a variant to the present method and related device, comprises the coupling of the flexible metal layer to the **TPU** layer that acts as a base, i.e. basic dielectric layer by punching both elements together before application on the fabric layer that acts as a base. This is particularly advantageous at the production level, as it avoids the presence of thin secondary antennas, which are therefore extremely difficult to handle and move during the overall assembly of the device.

This would also advantageously allow to have previously made semi-finished products in stock to be applied directly to the fabric at a later stage.

The semi-finished products are in this embodiment preferably composed of:
- Base **TPU** layer
- Secondary antenna of flexible conductive material e.g. conductive fabric
- Chip with primary antenna in laminated or wire conductive material.
- Dielectric closure layer. Therefore, during the procedure there are the steps of:
- realization of the semi-finished **TPU** base and secondary antenna of flexible textile conductive material for both hot and cold lamination;
- assembly with antenna in traditional conductive material and chip (in the ways described below);
- closure with upper dielectric layer.

Furthermore, in a further advantageous and innovative way, in an embodiment variant of the innovative process for tracing fabrics, the part of the process of making the innovative electronic device is separated from the direct application on the secondary antenna in conductive fabric during the realization phase; therefore, an assembly is substantially made comprising at least one layer of basic dielectric material, a primary antenna and its electronic module and it is coupled to a second assembly comprising an adhesive or thermo-adhesive dielectric material and the secondary antenna in conductive fabric.

Said assembly can advantageously be applied in a single step to the base fabric on which the finished devices having the characteristics suitable for the purpose are applied in a single step of the process. In this way, advantageously, implementation times are greatly reduced and some implementation difficulties are further eliminated.

Therefore, during the procedure there are the steps of:
- realization of the semi-finished electronic device comprising at least basic dielectric layer, primary aluminium antenna with rigid module;
- realization of the second assembly comprising at least one secondary antenna conductive and dielectric textile adhesive/thermo-adhesive.
- assembly with fabric (in the ways described below).

The fact of having assemblies in stock, or innovative electronic devices in a preferred variant already pre-packaged, allows to greatly reduce the processing times for customers who provide a fabric on which the devices must simply be applied, instead of making them one by one on the fabric; still, given that often the fabrics must be printed, coloured and/or customized at the request of the customer, if the devices are already pre-packaged, the processing times upon order arrival are reduced only to the customization of the fabric and subsequent application of the electronic device.

It is obvious that the fabrics used must have at least the characteristics of resistance to processing at high temperatures - substantially up to 200 degrees Celsius.

The textile memory system is completed by applying the electronic device with thermo-pressing at e.g. 150 - 160°C for 15 - 20 seconds. Or preferably ultrasound for about 4 seconds of application.

Therefore, in a particularly advantageous way, in this case the semi-finished products on a line are prepared and are assembled only when the printed fabrics arrive in the company, reducing the overall production time.

The entire production process is speeded up as it saves the time of the various heat pressed (about 60 seconds if all the steps are added) which in the innovative version is only reduced to 1 (for a total of 20 seconds).

It should also be noted that, in a further advantageous and innovative way, the applicant now preferably uses two types of TPU:
A first type of TPU, the one used for the base layer is a preferably 90 micron TPU composed of a layer of "glue" and one of non-adhesive elastic lyner. This material penetrates into the fabric for about two-thirds of the thickness and remains lifted from the fabric for about 25 microns.
A second type of TPU, preferably used for the cover layer, is a 250 micron TPU also composed of a glue layer and a non-adhesive elastic lyner. This product is composed of about 50 microns of glue that melts into the fabric and the lower layers of the device while the rest, therefore 200 microns, allow you to secure the primary antenna and the rigid module well without tearing (the rigid module on the edges could cut this material). Thinner (90 microns) but much more elastic materials are also being tested; advantageously, these materials increase the overall flexibility of the device and, being more elastic, avoid cutting with the rigid module.

### Brief Description of the Figures

These and further advantages related to the innovative fabric memory system and related innovative fabric digitization process will be better highlighted and described with reference to the attached figures in which:
- Fig 1a and 1b show an exploded view and a plan view of a first preferred embodiment of the system described by the present invention;
- in fig. 2a 2b an exploded view and a plan view of a second preferred embodiment of the system described by the present invention are represented;
- fig. 3a 3b shows an exploded view and a plan view of a third preferred embodiment of the system described by the present invention;
- fig. 4a 4b shows an exploded view and a plan view of a fourth preferred embodiment of the system described by the present invention;
- fig. 5a 5b shows an exploded view and a plan view of a fifth preferred embodiment of the system described by the present invention;
- fig. 6a, 6b shows an exploded view and a plan view of a sixth preferred embodiment of the system described by the present invention;

### Detailed description of the figures

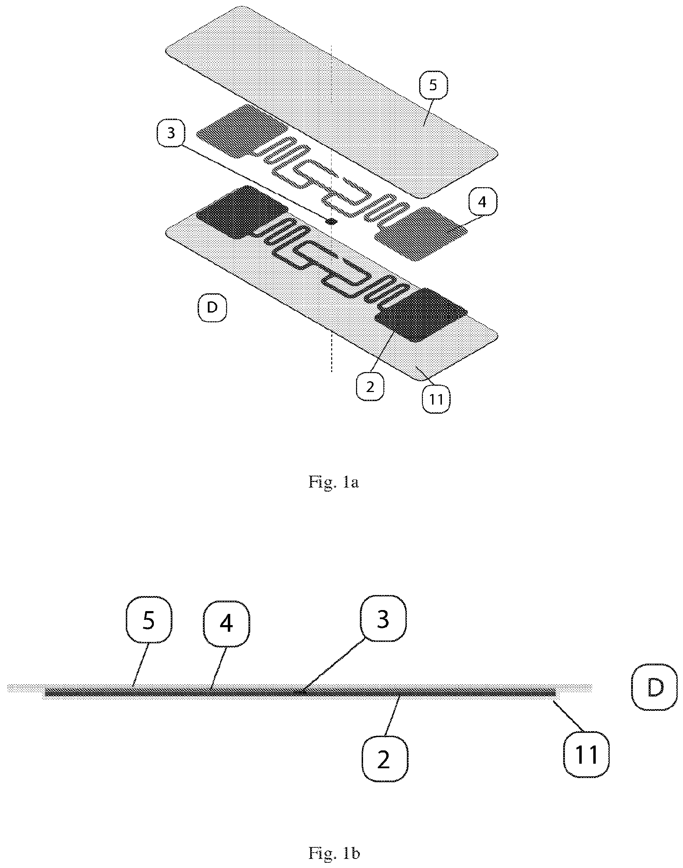

With reference to figure 1 (model 1), the basic model of the tracing system 1 for fabrics described by the present invention is represented in view of the other and in explosion; in particular said system comprises at least one layer of adhesive or thermo-adhesive dielectric material 11, a secondary antenna of conductive material in conductive fabric 2, here of preferably "dipole" shaped shape, a primary shaped laminated or wire antenna comprising a slot 4, at least one rigid electronic module 3 and at least one upper dielectric closure layer 5.

Note that the dielectric 11 of particular interest herein may be a polymer, a thermoadhesive material, a fabric and/or a polyurethane layer coated fabric, a nonwoven fabric TNT and/or materials of natural origin.

In particular, the innovative advantages concerning the coupling between the two conductive layers, of which one textile antenna and the other of laminated or wire antenna type, applied to a device with a structural polymeric conformation thereof, i.e. the advantageous and innovative aspects of the tracking system for fabrics described by the present invention, have been extensively described above, here greater attention will be paid to the innovative aspects of the process for the digitization of fabrics described by the present invention. In particular, this procedure for the type 1 model system comprises at least the steps of:
∘ dielectric sizing or rolling of the dielectric 11;
∘ pre-forming of the textile conductive layer secondary antenna 2 (model with a "gluing" side described above) with die-cutting, or laser cutting or mechanical cutting etc., realization with defined shape (textile Sdie) = (traditional conductive Sdie);
∘ hot or cold application of the dielectric layer 11 with roller or flat press or hot heat press (15 seconds at 55°C for example) or with ultrasonic system or other types of technologies suitable for coupling two layers.
   - alternatively: lamination of the secondary antenna conductive textile material 2 on the adhesive/thermo-adhesive dielectric 11 through traditional lamination processes.
   - semi die-cutting of the layer of conductive textile secondary antenna 2 without carving the adhesive/thermo-adhesive dielectric 11 through die-cutting processes, laser cutting, mechanical cutting, ultrasonic cutting etc.
   - scrap of the conductive material for the antenna 2 in excess and subsequent sizing of the adhesive/thermo-adhesive dielectric 11. The ultrasonic system is advantageous in that it lowers the overall operating temperature of the processing and accelerates the times (4 seconds at room temperature).
   - pre-forming the primary antenna of conductive material 4 through for example die-cutting, laser cutting or mechanical cutting.
   - positioning the primary antenna 4 by centring it on the dielectric layer 5 with a control system such as pick&place;
      (A variant includes the passage with heat pressure at 150°C for 1 - 2 seconds to make the primary antenna adhere well with any thermo-adhesive dielectric).
   - gluing phase; a glue point is given with the machine;
   - positioning of the rigid electronic module 3 by means of a control system;
   - coupling of the assemblies 1,2 with the assembly 3,4,5 through a control system.
   - Possible heat sealing of the closing device D at 155°C, for example 1/2 seconds.

Subsequently, the system 1 (and all the subsequent systems thus made) will be assembled by heat welding, sewing, or other methods explained below, from the side of the dielectric closure layer 5, whereby "visually" the system 1 (and all other embodiments) are mounted "backwards" with respect to the figures.

Therefore, device D can advantageously be welded on fabric and applied in turn on the fabric during the tracing phase so that it can be printed with any logo or pattern of the receiving fabric to be practically invisible. In this conformation, the system 1 is made directly on a base fabric and a fabric edge is made exceeding the area of realization of the 5 mm electronic device 1 to allow the subsequent stitching on a garment or other textile support.

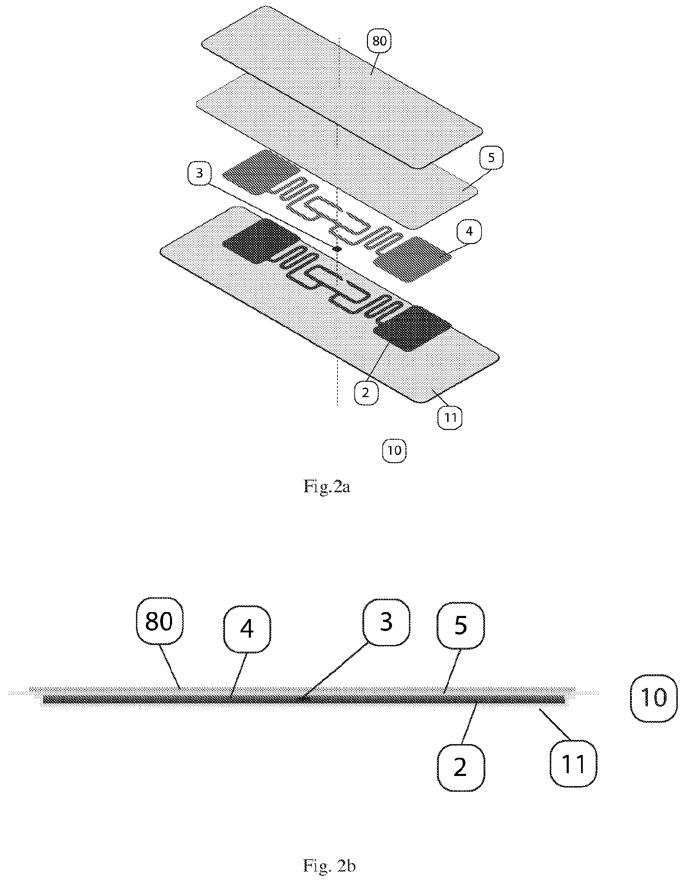

A second particularly preferred embodiment of the tracking system for fabrics 10 described by the present invention is depicted in Figure 2 (Model 2). In particular, in this embodiment the system 10 further comprises, placed above the closing dielectric layer 5, a further layer 80 of heat-sealable double-adhesive material for adhering the system 10 to a fabric T on which it is subsequently applied.

In particular, in this embodiment the innovative method for tissue tracing comprises at least the steps of:
- dielectric sizing or rolling of the dielectric 11;
- pre-forming of the secondary antenna in textile conductive material 2 (model with a "gluing" side described above) with die-cutting, or laser cutting or mechanical cutting etc., construction with defined shape (textile Sdie) = (traditional conductive Sdie);
- hot application of the dielectric layer 11 with roller or flat press or hot heat press (15 seconds at 55°C for example) or with ultrasonic system or other types of technologies suitable for coupling two layers.
   alternatively: lamination of the conductive textile material 2 on the adhesive/thermo-adhesive dielectric 11 through traditional lamination processes.
- semi die-cutting of the layer of conductive textile material 2 without carving the adhesive/thermo-adhesive dielectric 11 through die-cutting processes, laser cutting, mechanical cutting, ultrasonic cutting etc.
- scrap of the excess conductive material and subsequent sizing of the adhesive/thermo-adhesive dielectric 11.
- pre-forming the primary antenna in laminated or wire conductive material 4 through for example die-cutting, laser cutting or mechanical cutting.
- positioning the primary antenna 4 by centring it on the dielectric layer 5 with a control system such as pick&place; (A variant includes the passage with heat pressure at 150°C for 1 - 2 seconds to make the antenna adhere well with any thermo-adhesive dielectric).
- gluing phase; a glue point is given with the machine; positioning of the rigid electronic module 3 by means of a control system;
- coupling of the assemblies 1,2 with the assembly 3,4,5 through a control system.
- Sizing or unrolling of the adhesive or thermo-adhesive dielectric layer and application to the assembly 11,2,3,4,5.

It should be noted that for this specific processing a thermoset PET film is used with a release material since the material, being adhesive on one side, must maintain the glue but at the same time adhere to the fabric of the tracking system for fabrics. Thanks to this film, the remaining "solid" glue is only active when the system is heat-sealed to the garment (typically at 150-160°C for 15 - 20 seconds). The layer 80 melts completely allowing the adhesion of the system for example on a shirt in an integral manner. Note that it is not possible to make the system directly on a shirt, generally because the fabric of the shirts is substantially elastic and does not guarantee the mechanical structure that the device needs.

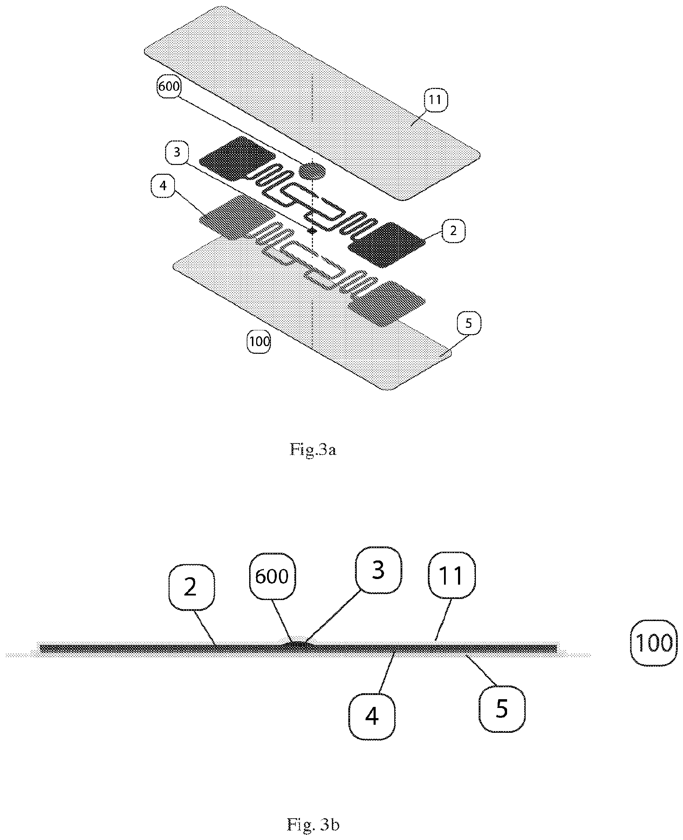

Figure 3a and 3b (model 3) show a variant of the embodiment of figure 1a,1b, or a further particularly preferred embodiment of the tracking system for fabrics 100 described by the present invention. In particular, in this embodiment the system comprises a rigid protection 600 of material suitable for protecting the welded areas of the tracing system for fabrics 100.

In this case, between the layer of conductive materials secondary antenna 2 and primary antenna 4 also incorporating the rigid electronic component 3, a rigid layer is made in order to move the folding points of the system outside the welds. The rigid layer will be made of the minimum thickness and size for its technological effect, for example from 25 microns to 40 cm, without, however, interfering excessively with the overall flexibility and softness of the system 100.

In this way the flexibility of the system is not reduced, the joint between the rigid electronic component 3 and the conductive antennas 2 and 4 are protected and covered for a clear aesthetic improvement.

In particular, in this embodiment the innovative process for the digitization of fabrics comprises at least the steps of:
- dielectric sizing or rolling of dielectric 5;
- pre-forming of the primary antenna of traditional conductive material 4 through for example die-cutting, laser cutting, mechanical cutting etc.
- positioning the primary antenna by centring it on the dielectric layer 5 with a control system such as pick&place; (A variant includes the passage with heat pressure at 150°C for 1 - 2 seconds to make the antenna adhere well with any thermo-adhesive dielectric).
- gluing phase; a glue point is given with the machine;
- positioning of the rigid electronic module 3 by means of a control system;
- pre-forming of the textile conductive layer 2 (model with a "gluing" side described above) with die-cutting, or laser cutting or mechanical cutting etc ect., realization with defined shape (textile Sdie) = (traditional conductive Sdie);
- creation of the stiffened area 600 through resin coating, liquid stiffening, application of rigid polymer layers, etc. through controlled machines, positioners, etc.
- in the case of resin coating or liquid stiffening, air, UV, chemical, oven, laser polymerization treatment, etc.
- application of the dielectric layer 1 with roller or flat press or hot press (15 seconds at 55°C for example) or with ultrasonic system or other types of technologies suitable for coupling two layers.

It should be noted that the further advantage of polymerization is that it only operates where it is really needed, that is, they only act on the stiffening material without changing the state of flexibility of the device. For this reason, the use in the present invention is much more resistant than existing technologies and is particularly interesting for those in the sector. The device maintains high standards of flexibility and softness but at the same time a high mechanical resistance to impacts and mechanical stresses.

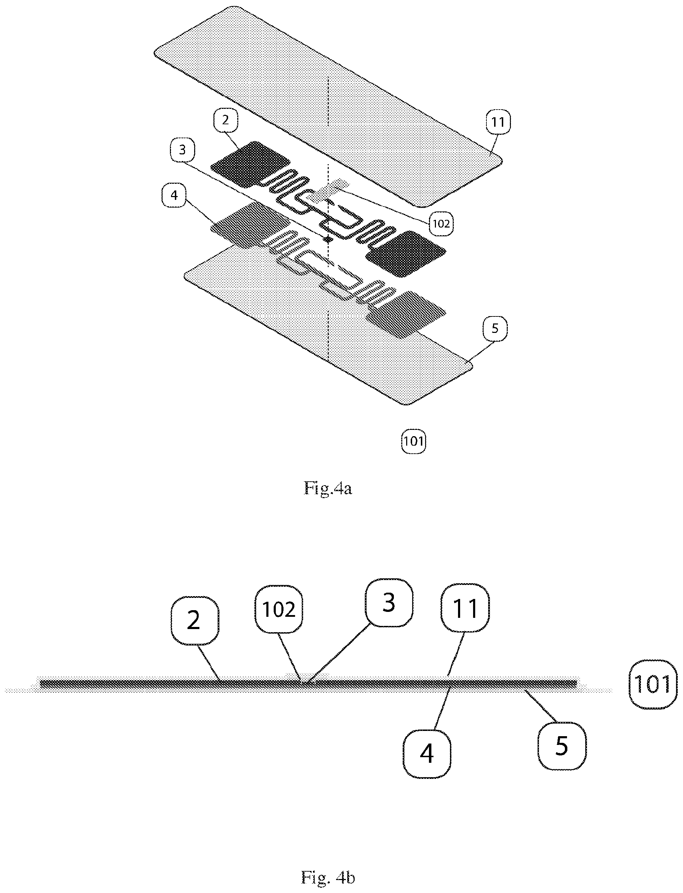

Figure 4a and 4b (model 4) shows a further particularly preferred embodiment of the tracking system for fabrics 101 described by the present invention; in particular in this variant, in a particularly advantageous way the memory system for fabrics comprises instead of a rigid layer of protections, a Lyner 102, that is in this case a film (thickness from 80 microns to 4/5 mm for example of PET or Kapton) that will be coupled to the traditional conductive layers 4 and basic fabrics 2 and to the rigid electronic module 3 to confer structural support but allow an even higher flexibility to the finished system 101.

In this case, the innovative method for tracing fabrics described by the present invention comprises at least the steps of:
- dielectric sizing or rolling of dielectric 5;
- pre-forming of the primary antenna of traditional conductive material 4 through for example die-cutting, laser cutting, mechanical cutting etc.
- positioning the antenna by centring it on the dielectric layer 5 with a control system such as pick&place; (A variant includes the passage with heat pressure at 150°C for 1 - 2 seconds to make the antenna adhere well with any thermo-adhesive dielectric).
- gluing phase; a glue point is given with the machine;
- positioning of the rigid electronic module 3 by means of a control system;
- pre-forming of the secondary antenna in textile conductive layer 2 (model with a "gluing" side described above) with die-cutting, or laser cutting or mechanical cutting etc ect., construction with defined shape (textile Sdie) = (traditional conductive Sdie);
- application of the adhesive lyner 102 through a rotational applicator, label feeder and the like orthogonal to the orientation of the system 101;
- application of the dielectric layer 1 with roller or flat press or hot press (15 seconds at 55°C for example) or with ultrasonic system or other types of technologies suitable for coupling two layers.

Note that this model is particularly suitable to be made in coil. Initially they have equal widths (50 cm wide coils were used here but the process can be extended to much longer coils (even 3 meters).

The lyner is also applied in a coil with a much smaller width. In this case described in width 5 mm. A different number of applicators is used as the number of tracks obtainable for each single coupled coil varies. Note that this operation also includes automatic sizing in length of the lyner. The coupling between lyner and device can also be done by means of heat-press or by means of heated rollers that in the case of lyner made of heat-sealing material.

(Note that the TPU used is made of a polyurethane multilayer with different chemical and manufacturing structures. Each layer is designed to optimise adhesion with the underlying products. The first layers are mainly dark and are usually activated at a temperature of around 80 degrees. More specifically, the first immediately adheres to the fabric, the second melts at a slightly higher temperature up to the 5th layer which melts at 135°C. The upper layers are slightly thicker from 12 to 18 microns and are composed in this way: basic polyurethane layer with high temperature resistance, polyurethane layer with the desired colour always resistant to temperatures and protective layer also resistant to temperature.

It should be noted that, in a particularly advantageous way, it has been verified that the chemical/physical conformation of the support added to the pressure given by the heat press allows the melting materials to penetrate between the warp and weft of the fabric, with a penetration index inversely proportional to the melting temperature of the layer (the first becomes almost liquid up to the fifth that remains semi-solid). Once the spaces are saturated, the other thicker layers of "full" material remain "floating" on the surface of the fabric.

The same holds true for the dielectric closure layer 11. The melting layers are able to penetrate the base 5 as the temperature softens the upper layers thereof and "melts" the melted layers of the closure 11 together. Waterproofing occurs due to the saturation of the bonding layers inside the fabric and the solid conformation of the non-fusing states.

Note that in order to extrude the TPU, a pet support is always needed to give it a "shape". This support film can then remain mounted on the TPU or be removed to allow further processing. The TPU of the base in most preferred embodiments is without PET film to eliminate the phase of elimination of the film itself (impossible in the automation phase but to be done by hand). On the contrary, for the closure layer 11, the PET layer is left applied as protection even after the manufacturing process has been completed, and the final customer will then remove it.

It should be noted that the conductive fabric layer can also be in a coil at this stage and with a coupled paper or dielectric structural lyner. The parts of the fabric can be cut later by laser; or it is possible to place the semi-finished products on already cut pieces;
Also for this embodiment it is then possible to add the thermo-bi-adhesive (layer 80 model 2) or the crown at the end of the process.

It should be noted that this innovative process can also be carried out by reversing the assembly order of the system; that is, it is possible to start from the upper layer 5 of the closing dielectric, subsequently positioning the rigid module 3 and gluing it (gluing phase) to the laminated or wire antenna 4, for example in aluminium. Finally, the remaining components of the system 102 are coupled. The reversal of the assembly order depends on the heat-sealing characteristic that one wants to give to the device: the ideal is the creation of a closure layer 5 of greater surface area than the overall surface area of the device 1, 10, 100, 101.

The incision of the coil to make the base for example 5, obtaining a shape (Sdie base) < (Sdie closure example 1).
- elimination of scrap or processing residue (i.e. by laser or cutting plotter the dielectric material is engraved without affecting the lower support film).

In this way we can obtain a preferred embodiment, such as for example with regard to the dielectric layer or base TPU 5 without necessarily having the lower and upper layer in dielectric material or closure TPU 11 of the same shape as each other (model 1). Note that it is possible in alternative embodiments to make a single laser cut of the coil at the end of the procedure, in which case the geometry of the base 11 of the closure 5 are the same and this does not alter the operation of the system.

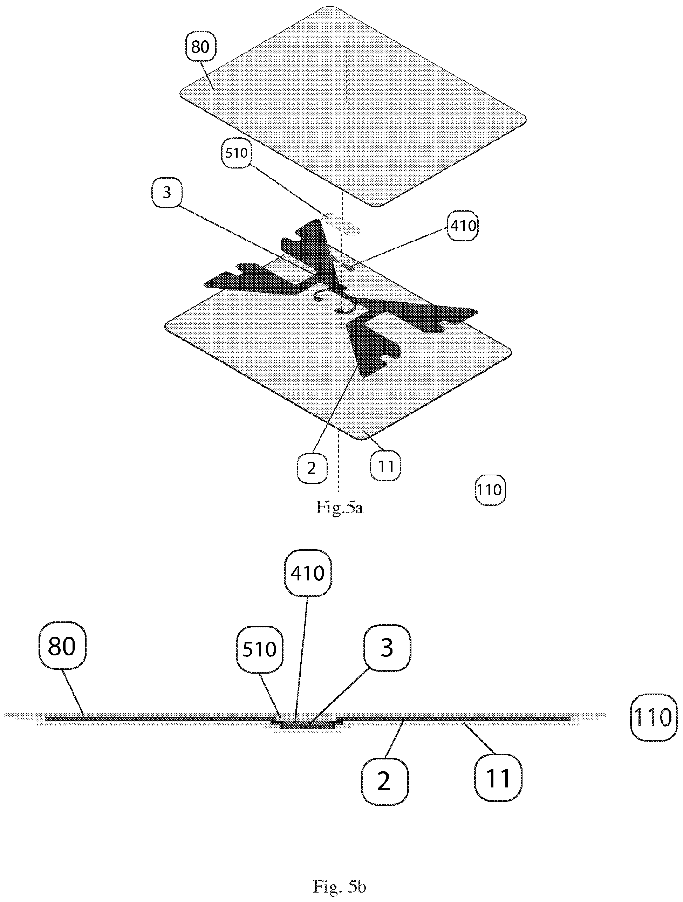

Figure 5a and 5b (model 5) shows a further particularly preferred embodiment of the tracking system for fabrics 110 described by the present invention; in particular in this variant, in a particularly advantageous manner the tracking system for fabrics 110 in this case comprises a dielectric layer 510 made of dielectric and a conductive primary antenna in conductive material 410 and a rigid electronic element 3.

The inventive model advantageously has the ability to replace the traditional primary antennas, made of laminated or wire conductive material, with a secondary antenna in conductive fabric 2, as it has characteristics suitable for giving radio frequency functionality to the device due to its size and shape in this embodiment.

**In** this case, therefore, in a further advantageous way, a potentially stiffening layer is eliminated, creating an extremely thin and flexible device. **In** this case, the innovative process for the digitization of fabrics described by the present invention comprises at least the steps of:
- sizing of the base dielectric (11) or roll processing of the base dielectric (11);
- pre-forming of the secondary antenna in textile conductive material 2 (model with a "gluing" side described above) with die-cutting, or laser cutting or mechanical cutting etc., construction with defined shape (textile Sdie) = (traditional conductive Sdie);
- hot or cold application of the dielectric layer (11) with roller or flat press or hot heat press (15 seconds at 55°C for example) or with ultrasonic system or other types of technologies suitable for coupling two layers.
- alternatively: lamination of the conductive textile material 2 on the adhesive/thermo-adhesive dielectric 1 through traditional lamination processes.
- semi die-cutting of the layer of conductive textile material 2 without carving the adhesive/thermo-adhesive dielectric 1 through die-cutting processes, laser cutting, mechanical cutting, ultrasonic cutting etc etc.
- manage the scrap excess material of the conductive secondary antenna 2 and subsequent sizing of the adhesive/thermo-adhesive dielectric 1.
- pre-forming the primary antenna in conductive material 410 through for example die-cutting, laser cutting or mechanical cutting.
- positioning the antenna by centring it on the dielectric layer 510 with a control system such as pick&place; (A variant includes the passage with heat pressure at 150°C for 1 - 2 seconds to make the antenna adhere well with any thermo-adhesive dielectric).
- gluing phase; a glue point is given with the machine;
- positioning of the rigid electronic module 3 by means of a control system;
- coupling of the assembly composed of layer 11 and 2 with assembly 3,4,5 through a control system.
- Possible layer of adhesive or thermo-adhesive dielectric material 80 of closure obtained as per the models present.

In this way, a semi-finished product is always obtained as for the embodiment of the memory system for fabrics 100; the adhesion on the fabric takes place through the overflow of any thermo-adhesive layer 1 or by the application of a further dielectric layer 80 of adhesive or thermo-adhesive closure, as described by models 2 and 3.

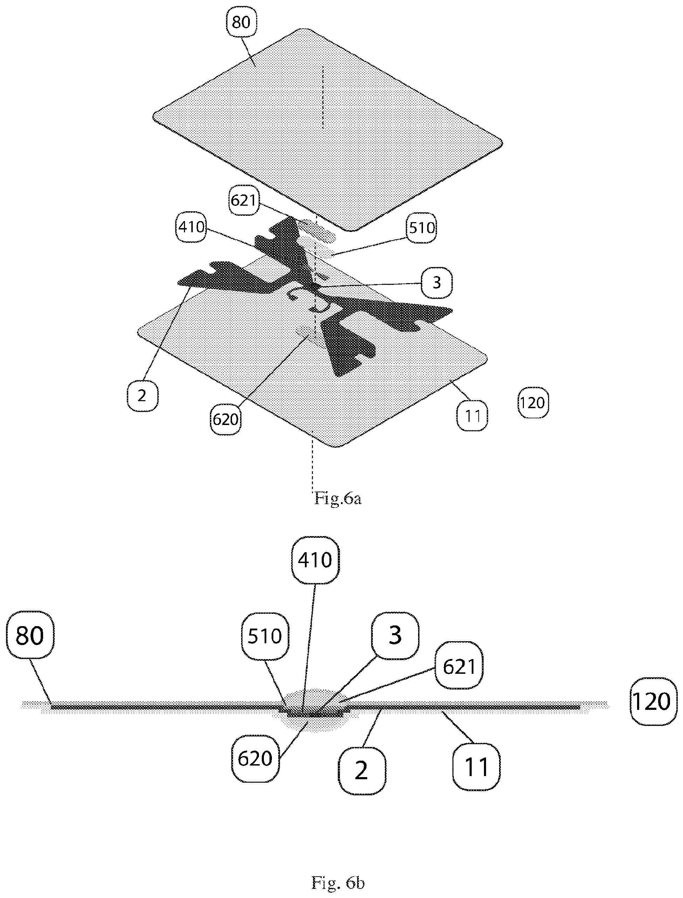

Finally, in figure 6a,6b, (model 6) are represented the steps of the innovative process for tracing fabrics for the realization in this case of a particularly preferred embodiment, in which the tracing system for fabrics 120 described by the present invention is made by creating a rigid or semi-rigid protection layer close to the assembly 410,510,3 with the secondary antenna obtained in conductive fabric 2 incorporating the welding zone. In particular, a semi-finished product comprising at least the dielectric layer 510 and the primary antenna 401 and the rigid electronic module 3 is advantageously made. Subsequently, the secondary antenna in conductive fabric 2 is coupled. This area is stiffened by polymeric, metallic, etc. materials equally superiorly, inferiorly or in both positions. Additionally, it is possible to obtain the 410/510 assembly through the creation of a rigid PCB (Printed circuit board) of various thicknesses (511). In a particularly advantageous way, the realization of this semi-finished product allows to avoid having to manage the secondary antenna in conductive fabric independently, a factor that (as described above) causes problems, as the structure is very flexible, so difficult to move and position, the semi-finished product thus realized simplifies the movement of the primary antenna 410.

The base polymer layers 1 can be coupled to a layer or film or already sized, which is only used to move the various semi-finished products during processing. On the contrary, it would be impossible to transport them as they do not have a sufficient mechanical structure to be manipulated with precision.

Processing phases starting from the roll:
- pre-forming of the textile conductive layer 2 (model with a "gluing" side described above) with die-cutting, or laser cutting or mechanical cutting etc ect., realization with defined shape (textile Sdie) = (traditional conductive Sdie);
- pre-forming the primary antenna 4 in conductive material 410 through for example die-cutting, laser cutting or mechanical cutting.
- positioning the primary antenna 4 by centring it on the dielectric layer 510 with a control system such as pick&place; (A variant includes passing with heat pressure at 150°C for 1 - 2 seconds to make the antenna adhere well with any thermo-adhesive dielectric).
- gluing phase; a glue point is given with the machine;
- positioning of the rigid electronic module 3 by means of a control system;
- Coupling assembly 410,510,3 with the secondary antenna in conductive fabric 2;
- Creation of the stiffened area 620,621 through resin coating, liquid stiffening, application of rigid polymer layers etc. through control machines, positioners etc;
- in the case of resin coating or liquid stiffening, air, UV, chemical, oven, laser polymerization treatment, etc.
- dielectric sizing or rolling of dielectric 1;
- application of dielectric 1 with assembly 410,510,3,2,620,621 through roller application, thermo-pressing, continuous application, sheeting etc.
- Possible layer of adhesive or thermo-adhesive dielectric material 80 of closure obtained as per the models present.

As mentioned, all the models obtained by the processes described, in a particularly innovative way, allow the creation of a device solidly applicable to a flexible and semi-flexible support, as a mere example to a fabric. The mechanical structuring and the applicability of the phases, even in a different order from that described, make it possible to obtain electronic devices suitable for operation even if mechanically stressed or through chemical attacks.

If used, die cutters can have cutting profiles at different heights. This allows the two materials to be engraved with different shapes.

By removing the scraps from the bases 1, the conductive tissue of the secondary antenna 2 is removed from the primary antenna 4. To remove said scraps, the roll of scrap materials is rewound, whereby only the scrap part is wound, the sheets will have their own geometry with studied shapes, while the dielectric 1 will have a preferably shaped shape, maintaining, for example, upper surface with respect to the dielectric layer 5.

The construction of the rigid or semi-rigid structures (620,621) can then be made of different materials including rigid polymers (by way of example only epoxy or polypropylene resins) or "softer" polymers such as silicones or foamed foams. They can also be made in hybrid forms, that is, with the application of stiffer structures complemented by softer structures. This solution, depending on the purpose of use of the present invention, allows to create optimal solutions depending on the stresses required to the device (for example the fulling).

It should be noted that variations in the order of performance of the steps of the innovative process for tracing fabrics, or variations in temperatures and processing times are to be considered mere alternative embodiments to the innovative process described herein as well as mere variants of the innovative fabric memory system thus obtained. Further variants in materials, such as those used for the antenna, such as aluminium, copper or other conductive materials, process steps, additional alternatives, processing formats, supports on which the systems are made, for which supports with adequate structure and not only textile supports, are all to be considered variants included in the subject matter of the present invention as better described by the appended claims.

## Claims

1. RFID system (1,10,100) for flexible supports such as fabrics, said RFID system comprising at least one device (D), said device (D) comprising at least:
a dielectric element base layer (11);
a secondary antenna (2) made of textile conductive material; at least one die (3) rigid electronic module;
**characterized in that** the device also includes
a further primary antenna (4) made of laminated or wire conductive material; at least one dielectric closure layer (5);
said device (D) being fixed to at least one flexible or ultra-flexible support layer, said RFID system being a UHF, HF or NFC RFID system, said secondary antenna (2) in conductive textile material being adapted to reinforce said primary antenna (4) made of laminated or wire conductive materials, one or both antennas (2,4) being adapted to refract the magnetic field emitted by an RFID/NFC reader and said secondary antenna (2) being centered and superimposed to the primary antenna (4), allowing the distribution of electrical conduction even in the event of breaks in the primary antenna (4), while the magnetic field crossing the two conductive antennas (2,4) activates the electronic module (3) and amplifies the signal emitted by said module (3), the dielectric element (11) and the dielectric layer (5) being coupled by bonding or fusion between them and with the support layer (O), the module (3) and the primary antenna (4) and the secondary antenna in conductive textile material (2) remaining between said dielectric element base layer (11) and said at least one closure layer (5).

2. RFID system (1) for flexible supports such as the fabrics according to claim 1, wherein the secondary antenna in conductive fabric (2) and the primary antenna in laminated or wire conductive material (4) are with shapes and dimensions equal to each other for the purpose of inductive radiofrequency reception, according to known frequencies and electrically connected to the rigid electronic module (3) alternatively or both.

3. RFID system (10) for flexible supports such as the fabrics according to the previous claims, wherein said device (D) provides a base dielectric layer (80) which is made to increase the adhesion of the device (D) to the support and the moisture resistance of the system (1,10) said layer (80) can be both adhesive and thermo-adhesive being suitable to act as a supporting support for the system (1O), said base support having any degree of elasticity.

4. RFID system (100) for flexible supports such as the fabrics according to the preceding claims, wherein the device (D) comprising part or all of the secondary antenna in conductive fabric (2), the primary antenna in laminated or wire conductive material (4), the rigid electronic module (3) and also the base dielectric layer (11) or said at least one closure layer (5), is protected with a layer of rigid, semi-rigid or a combination of materials (600).

5. RFID system (101) for flexible supports such as the fabrics according to the preceding claims, wherein said system (101) comprises instead of [the] a rigid or semi-rigid layer (600), a layer of lyner or film (102) coupled to the primary antenna in laminated or wire material (4), to the rigid electronic module die (3), to the antenna in textile conductive material (2), and to the base layer of dielectric (11) to confer structural support to the system (101).

6. RFID system (110) for flexible supports such as the fabrics according to the preceding claims, wherein said system (11O) is made as semi-processed comprising at least a dielectric layer (51O) and the primary antenna in the form of a shaped aluminium sheet (41O), this simplifying the welding of the die rigid electronic module (3) and the electrical coupling with said secondary antenna in conductive fabric (2), in this case the secondary antenna (2) amplifying the signal.

7. Method for producing an RFID device (D) as defined in any of claims 1-6, the method comprising the steps of:
(a) providing a base dielectric layer (11);
(b) forming a secondary antenna (2) in conductive textile material by die-cutting, laser cutting, mechanical cutting or ultrasonic cutting, to a predefined geometry;
(c) coupling the secondary antenna (2) to the base dielectric layer (11) by lamination or by hot or cold pressing or by ultrasonic coupling to obtain a first sub-assembly (11,2);
(d) forming a primary antenna (4) in laminated or wire conductive material by die-cutting, laser cutting or mechanical cutting;
(e) providing a dielectric closure layer (5) and positioning the primary antenna (4) on the dielectric closure layer (5) by a positioning system;
(f) applying an adhesive to the primary antenna (4) and positioning a rigid electronic module (3) on the primary antenna (4) to obtain a second sub-assembly (3,4,5);
(g) coupling the first sub-assembly (11,2) with the second sub-assembly (3,4,5) so that the primary antenna (4), the secondary antenna (2) and the rigid electronic module (3) remain housed between the base dielectric layer (11) and the dielectric closure layer (5); and
(h) sealing the device (D) by bonding, fusion or heat sealing of the dielectric layers.

8. Method according to claim 7, wherein step (c) comprises:
(c1) laminating a conductive textile layer forming the secondary antenna (2) onto an adhesive or thermo-adhesive base dielectric layer (11);
(c2) semi-die-cutting the conductive textile layer to define the geometry of the secondary antenna (2) without cutting through the base dielectric layer (11); and
(c3) removing excess conductive textile material and sizing the base dielectric layer (11).

9. Method according to claim 7 or 8, wherein the base dielectric layer (11) is coupled to a carrier film or support layer for transport of semi-finished products during processing and the method further comprises, after step (g), at least one step of creating a stiffened area (620, 621) at least in a region of the rigid electronic module (3) by resin coating, liquid stiffening or application of rigid dielectric layers, followed by polymerization or curing by air, UV, chemical treatment, oven or laser treatment.

10. RFID system (120) for flexible supports such as the fabrics according to the preceding claims 1 - 6, wherein said system (120) is made as semi-finished product comprising at least one PCB formed by a dielectric layer (510) and a shaped aluminium sheet primary antenna (410) for welding the die rigid electronic module (3).

## Patentansprüche

1. RFID-System (1, 10, 100) für flexible Träger wie beispielsweise Gewebe, wobei das RFID-System mindestens eine Vorrichtung (D) umfasst, wobei die Vorrichtung (D) mindestens Folgendes umfasst:
eine Basisschicht aus einem dielektrischen Material (11);
eine Sekundärantenne (2) aus einem leitfähigen Textilmaterial;
mindestens ein starres elektronisches Chipmodul (3);
**dadurch gekennzeichnet, dass** die Vorrichtung ferner Folgendes umfasst:
eine zusätzliche Primärantenne (4) aus einem laminierten oder drahtförmigen leitfähigen Material;
mindestens eine dielektrische Abschlussschicht (5);
wobei die Vorrichtung (D) an mindestens einer flexiblen oder ultraflexiblen Trägerschicht befestigt ist, wobei das RFID-System ein UHF-, HF- oder NFC-RFID-System ist, wobei die Sekundärantenne (2) aus leitfähigem Textilmaterial dazu ausgebildet ist, die Primärantenne (4) aus laminiertem oder drahtförmigem leitfähigem Material zu verstärken, wobei eine oder beide Antennen (2, 4) dazu ausgebildet sind, das von einem RFID-/NFC-Lesegerät ausgesendete Magnetfeld zu brechen, und wobei die Sekundärantenne (2) zentriert und über der Primärantenne (4) angeordnet ist, wodurch eine Verteilung der elektrischen Leitfähigkeit auch bei Unterbrechungen der Primärantenne (4) ermöglicht wird, während das die beiden leitfähigen Antennen (2, 4) durchdringende Magnetfeld das elektronische Modul (3) aktiviert und das von diesem Modul (3) ausgesendete Signal verstärkt, wobei das dielektrische Element (11) und die dielektrische Schicht (5) durch Verkleben oder Verschmelzen miteinander und mit der Trägerschicht (O) verbunden sind, wobei das Modul (3), die Primärantenne (4) und die Sekundärantenne (2) aus leitfähigem Textilmaterial zwischen der Basisschicht aus dielektrischem Material (11) und der mindestens einen Abschlussschicht (5) angeordnet bleiben.

2. RFID-System (1) für flexible Träger wie beispielsweise Gewebe nach Anspruch 1, wobei die Sekundärantenne aus leitfähigem Gewebe (2) und die Primärantenne aus laminiertem oder drahtförmigem leitfähigem Material (4) hinsichtlich ihrer Form und Abmessungen identisch sind, um einen induktiven Hochfrequenzempfang bei bekannten Frequenzen zu ermöglichen, und wobei die Antennen alternativ oder beide elektrisch mit dem starren elektronischen Modul (3) verbunden sind.

3. RFID-System (10) für flexible Träger wie beispielsweise Gewebe nach den vorhergehenden Ansprüchen, wobei die Vorrichtung (D) eine dielektrische Basisschicht (80) aufweist, die dazu ausgebildet ist, die Haftung der Vorrichtung (D) am Träger und die Feuchtigkeitsbeständigkeit des Systems (1, 10) zu erhöhen, wobei die Schicht (80) sowohl selbstklebend als auch thermoklebend sein kann und dazu geeignet ist, als Trägerschicht für das System (1O) zu dienen, wobei der Basisträger einen beliebigen Elastizitätsgrad aufweist.

4. RFID-System (100) für flexible Träger wie beispielsweise Gewebe nach den vorhergehenden Ansprüchen, wobei die Vorrichtung (D), die einen Teil oder die Gesamtheit der Sekundärantenne aus leitfähigem Gewebe (2), der Primärantenne aus laminiertem oder drahtförmigem leitfähigem Material (4), des starren elektronischen Moduls (3) sowie der dielektrischen Basisschicht (11) oder der mindestens einen Abschlussschicht (5) umfasst, durch eine Schicht aus starren oder halbstarren Materialien oder einer Kombination solcher Materialien (600) geschützt ist.

5. RFID-System (101) für flexible Träger wie beispielsweise Gewebe nach den vorhergehenden Ansprüchen, wobei das System (101) anstelle der einer starren oder halbstarren Schicht (600) eine Liner- oder Folienschicht (102) umfasst, die mit der Primärantenne aus laminiertem oder drahtförmigem Material (4), dem starren elektronischen Chipmodul (3), der Antenne aus leitfähigem Textilmaterial (2) und der dielektrischen Basisschicht (11) verbunden ist, um dem System (101) strukturellen Halt zu verleihen.

6. RFID-System (110) für flexible Träger wie beispielsweise Gewebe nach den vorhergehenden Ansprüchen, wobei das System (11O) als Halbfabrikat ausgebildet ist, das mindestens eine dielektrische Schicht (51O) und die Primärantenne in Form einer zugeschnittenen Aluminiumfolie (41O) umfasst, wodurch das Anschweißen des starren elektronischen Chipmoduls (3) und die elektrische Kopplung mit der Sekundärantenne aus leitfähigem Gewebe (2) vereinfacht werden, wobei die Sekundärantenne (2) in diesem Fall das Signal verstärkt.

7. Verfahren zur Herstellung einer RFID-Vorrichtung (D) nach einem der Ansprüche 1 bis 6, wobei das Verfahren die folgenden Schritte umfasst:
(a) Bereitstellen einer dielektrischen Basisschicht (11);
(b) Ausbilden einer Sekundärantenne (2) aus leitfähigem Textilmaterial durch Stanzen, Laserschneiden, mechanisches Schneiden oder Ultraschallschneiden gemäß einer vorgegebenen Geometrie;
(c) Verbinden der Sekundärantenne (2) mit der dielektrischen Basisschicht (11) durch Laminieren, Heiß- oder Kaltpressen oder Ultraschallfügen, um eine erste Teilbaugruppe (11, 2) zu erhalten;
(d) Ausbilden einer Primärantenne (4) aus laminiertem oder drahtförmigem leitfähigem Material durch Stanzen, Laserschneiden oder mechanisches Schneiden;
(e) Bereitstellen einer dielektrischen Abschlussschicht (5) und Positionieren der Primärantenne (4) auf der dielektrischen Abschlussschicht (5) mittels eines Positionierungssystems;
(f) Aufbringen eines Klebstoffs auf die Primärantenne (4) und Positionieren eines starren elektronischen Moduls (3) auf der Primärantenne (4), um eine zweite Teilbaugruppe (3, 4, 5) zu erhalten;
(g) Verbinden der ersten Teilbaugruppe (11, 2) mit der zweiten Teilbaugruppe (3, 4, 5), sodass die Primärantenne (4), die Sekundärantenne (2) und das starre elektronische Modul (3) zwischen der dielektrischen Basisschicht (11) und der dielektrischen Abschlussschicht (5) eingeschlossen bleiben; und
(h) Versiegeln der Vorrichtung (D) durch Verkleben, Verschmelzen oder Heißsiegeln der dielektrischen Schichten.

8. Verfahren nach Anspruch 7, wobei Schritt (c) Folgendes umfasst:
(c1) Laminieren einer leitfähigen Textilschicht, welche die Sekundärantenne (2) bildet, auf eine selbstklebende oder thermoklebende dielektrische Basisschicht (11);
(c2) Anstanzen der leitfähigen Textilschicht, um die Geometrie der Sekundärantenne (2) festzulegen, ohne die dielektrische Basisschicht (11) vollständig zu durchtrennen; und
(c3) Entfernen des überschüssigen leitfähigen Textilmaterials und Zuschneiden der dielektrischen Basisschicht (11) auf die erforderlichen Abmessungen.

9. Verfahren nach Anspruch 7 oder 8, wobei die dielektrische Basisschicht (11) mit einer Trägerfolie oder einer Trägerschicht zum Transport von Halbfabrikaten während der Verarbeitung verbunden ist und das Verfahren ferner nach Schritt (g) mindestens einen Schritt zur Herstellung eines versteiften Bereichs (620, 621) zumindest im Bereich des starren elektronischen Moduls (3) durch Beschichten mit Harz, Versteifen mittels eines flüssigen Versteifungsmittels oder Aufbringen starrer dielektrischer Schichten umfasst, gefolgt von einer Polymerisation oder Aushärtung an der Luft, durch UV-Bestrahlung, chemische Behandlung, Ofenbehandlung oder Laserbehandlung.

10. RFID-System (120) für flexible Träger wie beispielsweise Gewebe nach einem der vorhergehenden Ansprüche 1 bis 6, wobei das System (120) als Halbfabrikat ausgebildet ist, das mindestens eine Leiterplatte (PCB) umfasst, die aus einer dielektrischen Schicht (510) und einer Primärantenne (410) in Form einer zugeschnittenen Aluminiumfolie gebildet ist, zum Anschweißen des starren elektronischen Chipmoduls (3).

## Revendications

1. Système RFID (1, 10, 100) pour supports souples tels que des tissus, ledit système RFID comprenant au moins un dispositif (D), ledit dispositif (D) comprenant au moins :
une couche de base en matériau diélectrique (11) ;
une antenne secondaire (2) réalisée en matériau textile conducteur ;
au moins un module électronique rigide à puce (3) ;
**caractérisé en ce que** le dispositif comprend également :
une antenne primaire supplémentaire (4) réalisée en matériau conducteur laminé ou filaire ;
au moins une couche de fermeture diélectrique (5) ;
ledit dispositif (D) étant fixé à au moins une couche de support souple ou ultra-souple, ledit système RFID étant un système RFID UHF, HF ou NFC, ladite antenne secondaire (2) en matériau textile conducteur étant conçue pour renforcer ladite antenne primaire (4) réalisée en matériau conducteur laminé ou filaire, l'une ou les deux antennes (2, 4) étant conçues pour réfracter le champ magnétique émis par un lecteur RFID/NFC et ladite antenne secondaire (2) étant centrée et superposée à l'antenne primaire (4), permettant la répartition de la conduction électrique même en cas de ruptures de l'antenne primaire (4), tandis que le champ magnétique traversant les deux antennes conductrices (2, 4) active le module électronique (3) et amplifie le signal émis par ledit module (3), l'élément diélectrique (11) et la couche diélectrique (5) étant assemblés par collage ou fusion entre eux et avec la couche de support (O), le module (3), l'antenne primaire (4) et l'antenne secondaire en matériau textile conducteur (2) étant disposés entre ladite couche de base en matériau diélectrique (11) et ladite au moins une couche de fermeture (5).

2. Système RFID (1) pour supports souples tels que des tissus selon la revendication 1, dans lequel l'antenne secondaire en tissu conducteur (2) et l'antenne primaire en matériau conducteur laminé ou filaire (4) présentent des formes et des dimensions identiques afin de permettre une réception inductive par radiofréquence, selon des fréquences connues, et sont connectées électriquement au module électronique rigide (3), soit alternativement, soit toutes les deux.

3. Système RFID (10) pour supports souples tels que des tissus selon les revendications précédentes, dans lequel ledit dispositif (D) comprend une couche diélectrique de base (80) conçue pour augmenter l'adhérence du dispositif (D) au support et la résistance à l'humidité du système (1, 10), ladite couche (80) pouvant être aussi bien adhésive que thermoadhésive et étant apte à servir de support porteur pour le système (1O), ledit support de base présentant un degré d'élasticité quelconque.

4. Système RFID (100) pour supports souples tels que des tissus selon les revendications précédentes, dans lequel le dispositif (D), comprenant tout ou partie de l'antenne secondaire en tissu conducteur (2), de l'antenne primaire en matériau conducteur laminé ou filaire (4), du module électronique rigide (3) ainsi que de la couche diélectrique de base (11) ou de ladite au moins une couche de fermeture (5), est protégé par une couche de matériaux rigides, semi-rigides ou d'une combinaison de ceux-ci (600).

5. Système RFID (101) pour supports souples tels que des tissus selon les revendications précédentes, dans lequel ledit système (101) comprend, à la place d'une couche rigide ou semi-rigide (600), une couche de liner ou de film (102) assemblée à l'antenne primaire en matériau conducteur laminé ou filaire (4), au module électronique rigide à puce (3), à l'antenne en matériau textile conducteur (2) et à la couche de base diélectrique (11), afin de conférer un support structurel au système (101).

6. Système RFID (110) pour supports souples tels que des tissus selon les revendications précédentes, dans lequel ledit système (11O) est réalisé sous forme de produit semi-fini comprenant au moins une couche diélectrique (51O) et l'antenne primaire sous la forme d'une feuille d'aluminium découpée (41O), ce qui simplifie le soudage du module électronique rigide à puce (3) et le couplage électrique avec ladite antenne secondaire en tissu conducteur (2), l'antenne secondaire (2) amplifiant, dans ce cas, le signal.

7. Procédé de fabrication d'un dispositif RFID (D) tel que défini dans l'une quelconque des revendications 1 à 6, le procédé comprenant les étapes consistant à :
(a) fournir une couche diélectrique de base (11) ;
(b) former une antenne secondaire (2) en matériau textile conducteur par découpage à l'emporte-pièce, découpe laser, découpe mécanique ou découpe par ultrasons, selon une géométrie prédéfinie ;
(c) assembler l'antenne secondaire (2) à la couche diélectrique de base (11) par laminage, par pressage à chaud ou à froid ou par assemblage par ultrasons, afin d'obtenir un premier sous-ensemble (11, 2) ;
(d) former une antenne primaire (4) en matériau conducteur laminé ou filaire par découpage à l'emporte-pièce, découpe laser ou découpe mécanique ;
(e) fournir une couche de fermeture diélectrique (5) et positionner l'antenne primaire (4) sur la couche de fermeture diélectrique (5) au moyen d'un système de positionnement ;
(f) appliquer un adhésif sur l'antenne primaire (4) et positionner un module électronique rigide (3) sur l'antenne primaire (4) afin d'obtenir un deuxième sous-ensemble (3, 4, 5) ;
(g) assembler le premier sous-ensemble (11, 2) au deuxième sous-ensemble (3, 4, 5) de manière à ce que l'antenne primaire (4), l'antenne secondaire (2) et le module électronique rigide (3) restent logés entre la couche diélectrique de base (11) et la couche de fermeture diélectrique (5) ; et
(h) sceller le dispositif (D) par collage, fusion ou thermoscellage des couches diélectriques.

8. Procédé selon la revendication 7, dans lequel l'étape (c) comprend :
(c1) le laminage d'une couche textile conductrice formant l'antenne secondaire (2) sur une couche diélectrique de base (11) adhésive ou thermoadhésive ;
(c2) la découpe à mi-chair de la couche textile conductrice afin de définir la géométrie de l'antenne secondaire (2) sans traverser la couche diélectrique de base (11) ; et
(c3) l'élimination de l'excédent de matériau textile conducteur et la mise aux dimensions de la couche diélectrique de base (11).

9. Procédé selon la revendication 7 ou 8, dans lequel la couche diélectrique de base (11) est assemblée à un film porteur ou à une couche de support pour le transport des produits semi-finis pendant le traitement, et le procédé comprend en outre, après l'étape (g), au moins une étape de création d'une zone rigidifiée (620, 621), au moins dans une région du module électronique rigide (3), par enduction de résine, rigidification à l'aide d'un produit liquide ou application de couches diélectriques rigides, suivie d'une polymérisation ou d'un durcissement à l'air, par UV, par traitement chimique, au four ou par traitement laser.

10. Système RFID (120) pour supports souples tels que des tissus selon l'une quelconque des revendications précédentes 1 à 6, dans lequel ledit système (120) est réalisé sous forme de produit semi-fini comprenant au moins un circuit imprimé (PCB) formé d'une couche diélectrique (510) et d'une antenne primaire (410) constituée d'une feuille d'aluminium découpée, destinée au soudage du module électronique rigide à puce (3).
